# EUROPÄISCHE PATENTSCHRIFT

(11) **EP 1 481 327 B1**
(45) Veröffentlichungstag und Bekanntmachung des Hinweises auf die Patenterteilung: **08.06.2005**
(21) Anmeldenummer: 03722457.3
(22) Anmeldetag: 11.04.2003
(51) Int. Cl.: G06F 12/12, G06F 1/00

(54) **AUF ZUFALL BASIERENDER ERSETZUNGSALGORITHMUS FÜR EINE CACHESPEICHEREINHEIT**
RANDOM REPLACEMENT ALGORITHM FOR A CACHE STORAGE UNIT
ALGORITHME DE REMPLACEMENT ALEATOIRE POUR DES ANTEMEMOIRES

(30) Priorität: 15.04.2002 DE 10216611
(43) Veröffentlichungstag der Anmeldung: 01.12.2004
(73) Patentinhaber: Infineon Technologies AG, 81669 München (DE)
(72) Erfinder: GAMMEL, Berndt, 85570 Markt-Schwaben (DE)
(74) Vertreter: Zinkler, Franz, Dipl.-Ing.
(86) Internationale Anmeldenummer: PCT/EP2003/003800
(87) Internationale Veröffentlichungsnummer: WO 2003/088051

(56) Entgegenhaltungen:
- WO-A-01/06374
- WO-A-01/52069
- US-A- 4 932 053
- US-A- 5 568 632
- SMITH A J: "CACHE MEMORIES" ACM COMPUTING SURVEYS, NEW YORK, NY, US, Bd. 14, Nr. 3, 1. September 1982 (1982-09-01), Seiten 473-530, XP000284855 ISSN: 0360-0300
- JUN XU ET AL: "A novel cache architecture to support layer-four packet classification at memory access speeds" INFOCOM 2000. NINETEENTH ANNUAL JOINT CONFERENCE OF THE IEEE COMPUTER AND COMMUNICATIONS SOCIETIES. PROCEEDINGS. IEEE TEL AVIV, ISRAEL 26-30 MARCH 2000, PISCATAWAY, NJ, USA,IEEE, US, 26. März 2000 (2000-03-26), Seiten 1445-1454, XP010376081 ISBN: 0-7803-5880-5

## Beschreibung

Die vorliegende Erfindung bezieht sich auf Datenspeichervorrichtungen und insbesondere auf einen sicheren Betrieb solcher Datenspeichervorrichtungen.

Moderne Angriffe auf Datenverarbeitungseinrichtungen, die sicherheitsrelevante Daten verarbeiten bzw. auf die darin abgearbeiteten Algorithmen und geheimen Schlüssel erfolgen über sogenannte Leckinformationen. Leckinformationen sind beispielsweise der Stromverbrauch der Datenverarbeitungseinrichtung, eine elektromagnetische Abstrahlung während eines Betriebs der Datenverarbeitungseinrichtung etc. Aus einer statistischen Analyse der aufgenommenen physikalischen Signale kann auf sicherheitsrelevante Informationen rückgeschlossen werden.

Die bekanntesten Angriffsformen stellen hierbei die einfache Strom- bzw. Leistungsanalyse (Simple Power Analysis = SPA), die differentielle Leistungsanalyse (Differential Power Analysis = DPA) oder Stromanalysen höherer Ordnung (High-Order Differential Power Analysis = HO-DPA) dar.

Zur Verhinderung dieser Angriffe werden verschiedene Verfahren eingesetzt, wie z.B. softwaretechnische Verfahren durch ständiges Ändern der Abfolge der Operationen des kryptographischen Algorithmus oder durch Einfügen von redundanten Operationen. Hiermit können statistische Auswertungen, beispielsweise des Stromprofiles oder der elektromagnetischen Abstrahlung verhindert oder zumindest erheblich erschwert werden.

Ein Nachteil dieser Vorgehensweise ist der aufwendige Eingriff in die jeweilige Software und die Algorithmen sowie die in den meisten Fällen resultierende erhebliche Performance-Verringerung. Eine weitere bekannte Abwehrmaßnahme sind zusätzliche Stromprofilgeneratoren, die ein zusätzliches stochastisches Stromprofil dem ursprünglichen Stromprofil der Schaltung, wie z.B. des Controllers etc., überlagern. Der Nutzen dieser Vorgehensweise ist zweifelhaft, da sie im allgemeinen keinen ausreichenden Schutz gegenüber einer DPA oder HO-DPA gibt und außerdem zu einer erheblichen Erhöhung des Stromverbrauchs der Datenverarbeitungseinrichtung führen kann.

Eine weitere bekannte Maßnahme stellt das Einstreuen von zufälligen Aktionen in der Datenverarbeitungseinheit dar. Hierbei werden zufällige Befehlssequenzen und Zustände in Zustandsmaschinen eingestreut, um eine zeitliche Desynchronisation des Befehlsablaufs eines kryptographischen Prozesses zu erzeugen. Damit können das Auffinden von Triggerpunkten in Stromprofilen und eine Stromprofilanalyse mittels Resynchronisation im zeitlichen Verlauf erschwert werden. Die Steuerung, die als "Leerfunktionsgenerator" bezeichnet wird, dient zur Einschleusung von Zufallssequenzen beispielsweise in die Prozessor-Pipeline einer CPU. Eine solche Steuerung hat typischerweise eine erhebliche Komplexität, da sichergestellt werden muß, daß durch die Sicherheitsmaßnahmen die Integrität der bearbeiteten Daten und die Integrität des Befehlsstroms bewahrt werden. So dürfen beispielsweise nicht Register- oder Speicherinhalte fälschlich überschrieben werden. Natürlich darf auch die Kausalität von Instruktionen nicht verletzt werden, usw.

Moderne Datenverarbeitungseinrichtungen umfassen eine CPU, einen Speicher, wie z.B. einen festen Speicher und einen flüchtigen Speicher sowie einen Cache-Speicher, der erheblich dazu beiträgt, die Rechengeschwindigkeit einer Datenverarbeitungseinrichtung durch schnelle Speicherzugriffe zu erhöhen. Solche leistungsfähigen und schnellen Speichersysteme enthalten typischerweise mehrstufige Cache-Speicher bzw. Pufferspeicher, die Bereiche des Hauptspeichers temporär halten. Beispiele sind Instruktions-Cache-Speicher, Daten-Cache-Speicher oder TLBs (TLB = Translation Lookasid Buffer), die auch als Adress-Cache-Speicher bezeichnet werden. Solche Datenspeichervorrichtungen sind in verschiedenen Ausprägungen auf jedem Prozessor vorhanden. Assoziativ aufgebaute Cache-Speicher bzw. Speicher im allgemeinen halten eine Mehrzahl von Zeilen, d.h. Datenspeichereinheiten, in denen jeweils ein Datenblock aus dem Hauptspeicher abgelegt werden kann. Ein solcher Speicher wird auch als n-Wege assoziativer Cache-Speicher bezeichnet, wobei n die Anzahl der Datenspeichereinheiten bezeichnet. Eine dieser n-Datenspeichereinheiten wird ausgewählt, um einen neu in den Speicher zu speichernden Datenblock abzulegen. Hierbei wird der vorherig abgelegte Datenblock verdrängt. Der verdrängte Datenblock muß dann neu vom Hauptspeicher geladen werden, wenn er wieder benötigt wird.

Gewöhnlich wird zur Auswahl der Zeile, in die eine neue Dateneinheit geschrieben werden soll, ein sogenannter LRU-Algorithmus (LRU = Least Recently Used) benutzt, da mit einer solchen Ersetzungsstrategie typischerweise die beste Cache-Performance erzielt werden kann.

Eine andere, weniger aufwendige bekannte Ersetzungsstrategie ist die sogenannte Random-Replacement-Strategie, bei der die zu überschreibende Datenspeichereinheit zufällig ausgewählt wird. Bei hoher Cache-Assoziativität und großen Speichern kann mit der Random-Replacement-Strategie annähernd die Performance einer wesentlich aufwendiger zu implementierenden LRU-Strategie erreicht werden.

Der für die Zufallsersetzungsstrategie (Random-Replacement-Stragie) nötige Zufallszahlengenerator ist ein Pseudozufallszahlengenerator auf der Basis einer Schaltung aus rückgekoppelten linearen Schieberegistern (LFSR; LFSR = Linear Feedback Shift Register). Solche Schaltungen aus rückgekoppelten Schieberegistern werden durch einen sogenannten Keim oder Seed in einen definierten Anfangszustand versetzt, wobei dann, ausgehend von diesem definierten Anfangszustand, eine deterministische Folge von Zufallszahlen erzeugt wird, die jedoch eine annähernd zufällige Verteilung hat. Diese Folge ist jedoch dahingehend deterministisch, daß sie immer, wenn der vorbestimmte Keim in das LFSR eingespeist worden ist, exakt wiederholt wird. Wird ein anderer Kern eingespeist, so ergibt sich eine andere, jedoch ebenfalls vollständig wiederholbare Folge von zufällig erscheinenden Zufallszahlen.

Im Hinblick auf die oben beschriebenen Attacken auf kryptographische Datenverarbeitungseinrichtungen haben solche Pseudozufallszahlengeneratoren bzw. hat die auf diesen Pseudozufallszahlengeneratoren basierende Zufallsersetzungsstrategie den erheblichen Nachteil, daß der Programmablauf immer deterministisch bleibt. Insbesondere würde sich ein Programm nach jedem Neustart der CPU genau gleich verhalten. Dies stellt einen Angriffspunkt für Leistungsanalyseattacken dar.

Das US-Patent Nr. 5, 568,632 offenbart ein Verfahren und eine Vorrichtung zur Cache-Speicher-Ersetzung. Die Ersetzung findet basierend auf einer Zufallszahl statt, die von einem Randomisierer erzeugt wird. Immer dann, wenn ein Cache-Speicher-Fehlschlag (Miss) auftritt, wird der Randomisierer abgetastet, um eine aktuelle Zufallszahl zu erhalten, die eine Cache-Zelle identifiziert, deren Inhalt durch einen aktuellen Inhalt ersetzt werden soll. Der Randomisierer kann ein Zufallszahlengenerator oder ein Pseudozufallssequenzgenerator sein. Pseudozufallssequenzgeneratoren umfassen M-Sequenzen-Generatoren, die aus binären Speicherelementen bestehen, die Schieberegister bilden, und die ferner Modulo-2-Addierer umfassen, die sequentielle Werte erzeugen. Alternative Pseudozufallssequenzgeneratoren sind Pseudozufallszahlengeneratoren, die Sequenzen von gleichmäßig verteilten mehrstelligen Pseudozufallszahlen erzeugen. Andere Pseudozufallssequenzgeneratoren sind zusammengesetzte Zahlensequenzgeneratoren, die sowohl einen Pseudozufallszahlengenerator als auch einen Zufallszahlengenerator kombinieren, um Zahlensequenzen zu erzeugen, die keine Periodizität haben, und die auch ein Null-Muster sowie ein inkonsistentes Neuauftreten von Zahlen erlauben.

Die Aufgabe der vorliegenden Erfindung besteht darin, ein sicheres Konzept zum Speichern von Daten zu schaffen.

Diese Aufgabe wird durch eine Datenspeichervorrichtung nach Patentanspruch 1 oder 11 oder durch ein Verfahren zum Ersetzen eines Inhalts einer Datenspeichereinheit einer Datenspeichervorrichtung nach Patentanspruch 10 oder 20 gelöst.

Bevorzugte Ausführungsbeispiele der vorliegenden Erfindung werden nachfolgend bezugnehmend auf die beiliegenden Zeichnungen detailliert erläutert. Es zeigen:
- Fig. 1: ein Blockschaltbild einer erfindungsgemäßen sicheren Datenspeichervorrichtung; und
- Fig. 2: eine Datenspeichervorrichtung gemäß einem bevorzugten Ausführungsbeispiel der vorliegenden Erfindung.

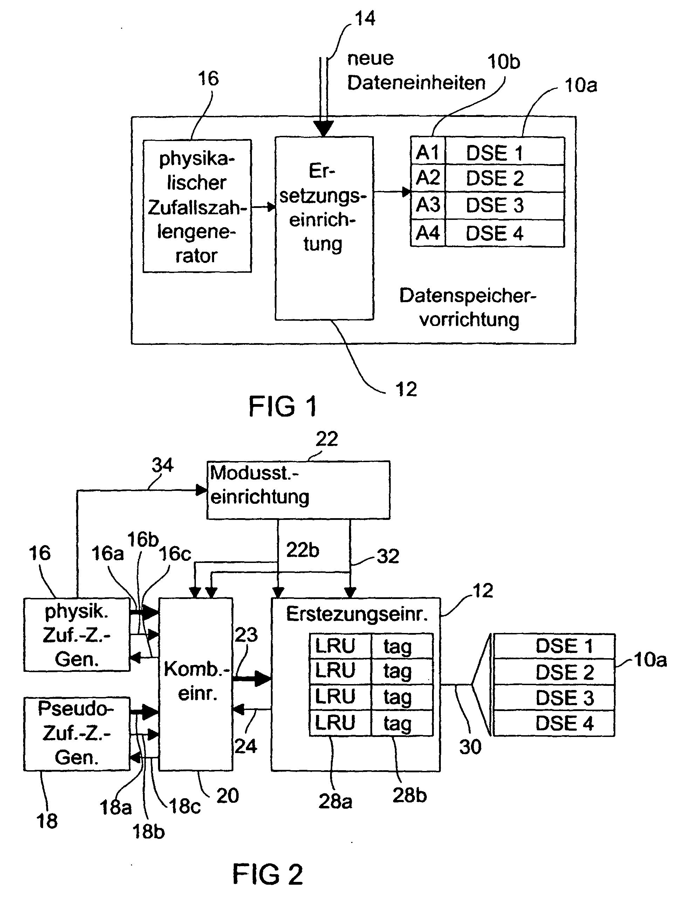

Zur Gewährleistung einer sicheren und dennoch effizienten Dekorrelation des Daten- und Befehlsstromes in einem modernen Mikroprozessor wird die in Fig. 1 gezeigte Datenspeichervorrichtung eingesetzt. Dieselbe umfaßt eine Mehrzahl von Datenspeichereinheiten 10a, denen jeweils Adressen 10b zugeordnet sind. Die Auswahl der Datenspeichereinrichtung findet über eine Adresse statt, die von einer Ersetzungseinrichtung 12 ausgewählt wird, wenn eine neue Dateneinheit über eine Dateneinheitenleitung 14 in eine Datenspeichereinheit zu schreiben ist. Die Ersetzungseinrichtung wird von einem physikalischen Zufallszahlengenerator 16 angesteuert, um eine Zufallsersetzungsstrategie auf der Basis einer tatsächlichen physikalischen Zufallszahl und nicht auf einer Pseudozufallszahl durchzuführen.

Der physikalische Zufallszahlengenerator umfaßt eine Rauschquelle, die auf einem physikalischen Rauschprozeß basiert. Beispielhafte Implementierungen bestehen darin, das thermische Rauschen eines Widerstands entweder direkt auszuwerten oder beispielsweise an einen Steuereingang eines spannungsgesteuerten Oszillators anzulegen, um einen größeren "Zufallshub" zu erreichen. Alternativ kann das Schrotrauschen einer Diode als physikalischer Rauschprozeß eingesetzt werden. Weitere physikalische Rauschprozesse sind bekannt.

Es sei darauf hingewiesen, daß in kryptographischen Prozessoren ohnehin Zufallszahlengeneratoren vorhanden sind, die eine Rauschquelle, welche auf einem physikalischen Rauschprozeß basiert, umfassen. So muß eine Datenspeichervorrichtung, die zu einem solchen kryptographischen Prozessorsystem gehört, nicht einmal um einen physikalischen Zufallszahlengenerator erweitert werden, da derselbe ohnehin vorhanden ist. Die einzige Modifikation besteht darin, wenn allein auf den physikalischen Zufallszahlengenerator aufgebaut wird, den physikalischen Zufallszahlengenerator des Kryptoprozessorsystems mit der Ersetzungseinrichtung 12 zu verbinden.

Fig. 2 zeigt ein bevorzugtes Ausführungsbeispiel einer sicheren Datenspeichervorrichtung gemäß der vorliegenden Erfindung. Neben den Datenspeichereinheiten 10a, der Ersetzungseinrichtung 12 und dem physikalischen Zufallszahlengenerator 16 ist ferner ein Pseudozufallszahlengenerator 18 vorgesehen, der ebenso wie der physikalische Zufallszahlengenerator 16 mit einer Kombinationseinrichtung 20 verbunden ist. Die Ersetzungseinrichtung 12 wird nunmehr nicht direkt vom physikalischen Zufallszahlengenerator angesteuert, sondern mittels eines Ansteuersignals 22, das in der Kombinationseinrichtung 20 unter Verwendung des physikalischen Zufallszahlengenerators 16 und des Pseudozufallszahlengenerators 18 erzeugt wird. Mit der Ersetzungseinrichtung 12 ist ferner eine Modussteuerungseinrichtung 22 gekoppelt, auf die später eingegangen wird. Der physikalische Zufallszahlengenerator liefert über eine Leitung 16a Zufallszahlen zur Kombinationseinrichtung 20. Über eine Leitung 16b, die als RN Valid bezeichnet wird, signalisiert der physikalische Zufallszahlengenerator der Kombinationseinrichtung 20, daß er bereit ist. Die Kombinationseinrichtung 20 kann auf den physikalischen Zufallszahlengenerator 16 über eine Steuerleitung 16c einwirken.

Der Pseudozufallszahlengenerator 18 liefert seine Pseudozufallszahlen über eine Leitung 18a der Kombinationseinrichtung 20. Der Pseudozufallszahlengenerator 18 ist ferner über eine PRN Valid-Leitung 18b mit der Kombinationseinrichtung 20 verbunden, die wiederum über eine Steuerleitung 18c auf den Pseudozufallszahlengenerator 18 einwirken kann. Auf der Leitung 22 liefert die Kombinationseinrichtung 20, wie es ausgeführt worden ist, der Ersetzungseinrichtung 12 eine Folge von Ansteuersignalen, von denen abhängig die Ersetzungseinrichtung 12 Datenspeichereinheiten auswählt, die durch einen aktuellen zu schreibenden Wert überschrieben werden sollen. Über eine Leitung 24 kann die Ersetzungseinrichtung 12 auf die Kombinationseinrichtung 20 einwirken, um beispielsweise eine oder mehrere Zufallszahlen bzw. Ansteuersignale anzufordern.

Die Modussteuerungseinrichtung 22 greift auf die Kombinationseinrichtung 20 und die Ersetzungseinrichtung 12 über eine Modusleitung 26 zu, um abhängig von äußeren Situationen, wie z.B. bestimmten Programmteilen oder bestimmten erforderlichen Sicherheitsstufen von einer randomisierten Ersetzungsstrategie auf der Basis des physikalischen Zufallszahlengenerators 16 auf eine deterministische Ersetzungsstrategie entweder allein auf der Basis des Pseudozufallszahlengenerators oder unter Verwendung alternativer bekannter Ersetzungsstrategien umzuschalten.

Die Ersetzungseinrichtung 12 umfaßt LRU-Informationen 28a für jede Datenspeichereinrichtung, um feststellen zu können, welche die am längsten nicht benutzte Datenspeichereinheit ist, um dann, wenn eine neue Datenmenge zu speichern ist, auf der Basis der LRU-Informationen 28a die am längsten nicht benutzte Datenspeichereinheit durch die neue Datenspeichereinheit zu überschreiben. Die Ersetzungseinrichtung 12 hält bei einem bevorzugten Ausführungsbeispiel, das für die Umschaltung auf eine deterministische Speicherersetzung ausgebildet ist, die TAG-Informationen 28b für jede Datenspeichereinheit, um einen assoziativen Datenspeicherzugriff zu schaffen. Mittels einer Adressenauswahlleitung 30 wird von der Ersetzungseinrichtung 12 auf die Datenspeichereinheiten zugegriffen, um eine Adressenauswahl für eine Ersetzung zu treffen. Ferner hat die Modussteuerungseinrichtung 22 eine weitere Ausgangsleitung 32, um nicht nur die Ersetzungsmodusstrategie einzustellen, sondern auch eine Zeitintervallsteuerung für eine Umschaltung von einer Strategie in eine andere Strategie zu bewirken.

Die Kombinationseinrichtung 20 kann auf verschiedene Arten und Weisen physikalische Zufallszahlen von dem Zufallszahlengenerator 16 mit Pseudozufallszahlen von dem Pseudozufallszahlengenerator 18 kombinieren. Allgemein sind Pseudozufallszahlengeneratoren auf der Basis von rückgekoppelten Schieberegistern in der Lage, eine schnelle Sequenz von Pseudozufallszahlen zu erzeugen, während physikalische Zufallszahlengeneratoren im allgemeinen langsamer sind, so daß für bestimmte sehr schnelle Anwendungen der physikalische Zufallszahlengenerator, wenn er stromsparend sein soll und nur eine geringe Fläche in Anspruch nehmen darf, zu langsam ist. In so einem Fall kann die Kombinationseinrichtung 20 ausgebildet sein, um immer beispielsweise nach einer bestimmten Anzahl n von Pseudozufallszahlen eine physikalische Zufallszahl zur Adressauswahl direkt zu verwenden.

Bei einem alternativen Ausführungsbeispiel der vorliegenden Erfindung ist die Kombinationseinrichtung 20 ausgebildet, um immer Pseudozufallszahlen vom Pseudozufallszahlengenerator 18 zur Adressauswahl zu verwenden. Die physikalischen Zufallszahlen werden hierbei eingesetzt, um den Pseudozufallszahlengenerator neu zu "seeden". Dies bedeutet, daß der physikalische Zufallszahlengenerator immer dann, wenn eine neue physikalische Zufallszahl vorliegt, die Leitung 16b aktiviert, um dann diese Zufallszahl der Kombinationseinrichtung 20 zuzuführen, die diese wiederum über die Leitung 18c dem Zufallszahlengenerator 18 zuführt, so daß die rückgekoppelten Schieberegister in einen durch die Zufallszahl diktierten Anfangszustand versetzt werden. Durch ständiges Neu-Initialisieren des Pseudozufallszahlengenerators wird ein randomisiertes Stromprofil erreicht, das ferner bei einem Neustart des Systems nicht immer gleich ist, sondern lediglich für die ersten paar Cache-Ersetzungen bis zum ersten Neu-Initialisieren, wenn eine erste physikalische Zufallszahl vorliegt, gleich ist, dann jedoch zufällig und somit nicht durch die beschriebenen Angriffe erfaßbar ist.

Die Kombination eines Pseudozufallszahlengenerators mit einem physikalischen Zufallszahlengenerator hat daher die Vorteile, daß Zufallszahlen schnell genug erzeugt werden können, da physikalische Zufallszahlengeneratoren alleine im allgemeinen nicht genügend Zufallsbit mit genügend hoher Taktrate erzeugen können, wie sie in schnellen Prozessoren benötigt werden, und daß dennoch eine sichere Dekorrelation des Befehls- und/oder Datenstroms erreicht wird, da der Zufallszahlengenerator nicht vorhersagbare Zufallszahlen liefert, die zur Modifikation der Zufallsfolge des Pseudozufallszahlengenerators benutzt werden.

Darüber hinaus ist die Modussteuerungseinrichtung 22 ausgebildet, um während des Betriebs ("On the Fly") die Ersetzungseinrichtung 12 und die Kombinationseinrichtung 20 umzuschalten, und zwar zwischen einem oder mehreren deterministischen Ersetzungsstrategien und der nicht-deterministischen Strategie auf der Basis der physikalischen Zufallszahlen. Die deterministische Strategie kann beispielsweise LRU, Round-Robin, Pseudo-Random-Replacement oder eine andere bekannte Ersetzungsstrategie sein.

Die Umschaltung mittels der Modussteuerungseinrichtung 22 ist dahingehend vorteilhaft, daß in nicht-sicherheitsrelevanten Programmen oder Programmteilen, wo Leistungsangriffe unbedeutend sind, eine günstigere deterministische Ersetzungsstragegie gewählt werden kann. Eine deterministische Strategie ist auch dann wichtig, wenn garantierte und vorhersagbare Laufzeiten in zeit-kritischen Programmteilen nötig sind.

Bei einem weiteren Ausführungsbeispiel der Erfindung wird die Ersetzungseinrichtung über die Steuerleitung 32 angesteuert, um immer zwischen verschiedenen deterministischen Ersetzungsstrategien hin- und herzuschalten, und zwar abhängig von einer Zufallszahl des physikalischen Zufallszahlengenerators, die der Modussteuerungseinrichtung über eine Zufallszahlensteuerleitung 34 zugeführt wird. Es muß daher nicht immer eine Zufallsersetzungsstrategie auf der Basis von echten Zufallszahlen eingesetzt werden, sondern es kann auch zwischen verschiedenen deterministischen Ersetzungsstrategien hin- und hergeschaltet werden, wobei diese Hin- und Herschaltung auf der Basis echter physikalischer Zufallszahlen basiert, derart, daß ebenfalls eine Randomisierung des Verhaltens der Datenspeichervorrichtung erreicht wird, um Leistungsanalysen abzuwehren. Hierzu wird in regelmäßigen oder alternativen, nicht vorhersagbaren zeitlichen Intervallen, die von den physikalischen Zufallszahlen abhängen, die deterministische Strategie außer Kraft gesetzt und stattdessen eine zufällige Zeile für die Ersetzung ausgewählt, oder es wird eine deterministische Strategie durch eine andere deterministische Strategie ersetzt. Die Korrelation des Befehlsstroms wird also zum einen durch die zufällige Ersetzung, und zum anderen durch das zufällige Intervall gewährleistet. Immer werden die physikalischen Zufallszahlen des physikalischen Zufallszahlengenerators 16 verwendet, wodurch die Nicht-Vorhersagbarkeit des Verhaltens der Datenspeichervorrichtung sichergestellt wird.

Bei einem weiteren Ausführungsbeispiel der vorliegenden Erfindung ist die Modussteuerungseinrichtung 22 ferner ausgebildet, um das Umschaltintervall bzw. das Einstreu-Intervall, gemäß dem zufällig ausgewählte Zeilen ersetzt werden, einzustellen. Auf diese Weise kann dynamisch zur Laufzeit das Sicherheitsniveau eingestellt werden, indem die Intervallänge, mit der zufällig ausgewählte Zeilen "eingestreut" werden, größer oder kleiner gemacht werden.

Das erfindungsgemäße Konzept ist, wie es ausgeführt worden ist, dahingehend vorteilhaft, daß eine zeitliche Dekorrelation der Cache-Ersetzungsstrategie ohne die Verwendung von Leerfunktionsgeneratoren in einer CPU-Pipelinesteuerung erreicht wird. Das erfindungsgemäße Konzept zeichnet sich durch einen geringen Implementierungsaufwand und durch eine vernachlässigbare Leistungsverringerung aus. Insbesondere in einem assoziativen Cache-Speicher mit dynamischer Umschaltung einer deterministischen Ersetzungsstrategie, wie z.B. Round-Robin, zu einer nicht-deterministischen Strategie unter Verwendung von physikalischen Zufallszahlen und gegebenenfalls zusätzlicher Verwendung von Pseudozufallszahlen wird eine sichere und effiziente Cache-Ersetzungsstrategie erreicht.

### Bezugszeichenliste

- 10a: Datenspeichereinheit
- 10b: Adresse für die Datenspeichereinheit
- 12: Ersetzungseinrichtung
- 14: Leitung für neue Daten
- 16: Physikalischer Zufallszahlengenerator
- 16a: Zufallszahlenleitung
- 16b: RN-Valid-Leitung
- 16c: Steuerleitung
- 18: Pseudozufallszahlengenerator
- 18a: Pseudozufallszahlenleitung
- 18b: PRN-Valid-Leitung
- 18c: Steuerleitung
- 20: Kombinationseinrichtung
- 22: Modussteuerungseinrichtung
- 23: Leitung für Ansteuersignale
- 24: Steuerleitung
- 26: Ersetzungsstrategie-Auswahlleitung
- 28a: LRU-Informationen
- 28b: PEG-Informationen für einen assoziativen Zugriff
- 30: Adressauswahlleitung für eine Ersetzung
- 32: Intervallsteuerungsleitung
- 34: Zufallszahlen-Eingangsleitung

## Patentansprüche

1. Datenspeichervorrichtung mit folgenden Merkmalen:
einer Mehrzahl von Datenspeichereinheiten (10a);
einem physikalischen Zufallszahlengenerator (16) mit einer Rauschquelle, die auf einem physikalischen Rauschprozeß basiert, zum Erzeugen einer Zufallszahl;
einem Pseudozufallszahlengenerator (18) zum Erzeugen einer Pseudozufallszahl;
eine Kombinationseinrichtung (20) zum Verwenden der Zufallszahl und der Pseudozufallszahl, um abhängig von der Zufallszahl und der Pseudozufallszahl ein Ansteuersignal (23) zu liefern; und
einer Ersetzungseinrichtung (12) zum Auswählen einer Datenspeichereinheit, in der Daten zu speichern sind, abhängig von der Zufallszahl,
**dadurch gekennzeichnet, dass**
die Kombinationseinrichtung (20) ausgebildet ist, um dann, wenn eine neue Zufallszahl vorliegt, die Zufallszahl in den Pseudozufallszahlengenerator (18) als Keim zum Neu-Initialisieren einzuspeisen und eine von dem Pseudozufallszahlengenerator auf der Basis der Zufallszahl als Keim erzeugte Pseudozufallszahl als Ansteuersignal (23) für die Ersetzungseinrichtung zu verwenden.

2. Datenspeichervorrichtung nach Anspruch 1, bei der die physikalische Rauschquelle des Zufallszahlengenerators (16) eine Schrotrauschquelle oder eine Quelle für thermisches Rauschen aufweist.

3. Datenspeichervorrichtung nach Anspruch 1 oder 2, bei der die Ersetzungseinrichtung (12) ausgebildet ist, um eine Folge von Adressen auszuwählen, und
bei der die Kombinationseinrichtung (20) ausgebildet ist, um Ansteuersignale für die Folge von Adressen so zu erzeugen, dass ein Ansteuersignal von der Zufallszahl abhängt und ein anderes Ansteuersignal von der Pseudozufallszahl abhängt.

4. Datenspeichervorrichtung nach einem der vorhergehenden Ansprüche,
die ferner eine Modusteuerungseinrichtung (22) aufweist, die ausgebildet ist, um die Ersetzungseinrichtung so anzusteuern, dass in einem vorbestimmten Zeitintervall eine Ersetzung aufgrund einer Zufallszahl deaktiviert ist und stattdessen eine deterministische Ersetzungsstrategie eingesetzt wird.

5. Datenspeichervorrichtung nach Anspruch 4, bei der die Modussteuerungseinrichtung (22) ausgebildet ist, um eine deterministische Ersetzungsstrategie zu veranlassen, wenn nicht-sicherheitsrelevante Berechnungen in einem mit der Datenspeichervorrichtung gekoppelten Prozessor auszuführen sind, oder wenn für eine Berechnung durch den Prozessor garantierte oder vorhersagbare Laufzeiten gefordert sind.

6. Datenspeichervorrichtung nach Anspruch 4 oder 5,
bei der die Modussteuerungseinrichtung (22) ausgebildet ist, um in regelmäßigen oder zufälligen Intervallen einen Wechsel der Ersetzungsstrategie zu veranlassen.

7. Datenspeichervorrichtung nach Anspruch 6, bei das zufällige zeitliche Intervall abhängig von einer Zufallszahl des physikalischen Zufallszahlengenerators durch die Modussteuerungseinrichtung (22) bestimmbar ist.

8. Datenspeichervorrichtung nach Anspruch 1,
die ferner eine Modussteuerungseinrichtung (22) aufweist, die ausgebildet ist, um eine Zufallszahl des physikalischen Zufallszahlengenerator über eine Zufallszahlleitung (34) zu erhalten, und die ferner ausgebildet ist, um abhängig von der Zufallszahl eine einer Mehrzahl von verschiedenen deterministischen Ersetzungsstrategien für die Ersetzungseinrichtung (12) auszuwählen.

9. Datenspeichervorrichtung nach einem der vorhergehenden Ansprüche, die als assoziativer Cache-Speicher ausgeführt ist.

10. Verfahren zum Ersetzen eines Inhalts einer Datenspeichervorrichtung, die eine Mehrzahl von Datenspeichereinheiten aufweist, mit folgenden Schritten:
Liefern einer von einem physikalischen Rauschprozeß abhängigen Zufallszahl;
Erzeugen einer Pseudozufallszahl mit einem Pseudozufallszahlengenerator (18);
Verwenden der Zufallszahl und der Pseudozufallszahl, um abhängig von der Zufallszahl und der Pseudozufallszahl ein Ansteuersignal (22) für eine Auswahl einer Datenspeichereinheit zu liefern;
Auswählen einer Datenspeichereinheit der Mehrzahl von Datenspeichereinheiten abhängig von der physikalischen Zufallszahl, basierend auf dem Ansteuersignal (22); und
Speichern von zu speichernden Daten in der ausgewählten Datenspeichereinheit,
**dadurch gekennzeichnet, dass**
im Schritt des Verwendens dann, wenn eine neue Zufallszahl vorliegt, dieselbe in den Pseudozufallszahlengenerator (18) als Keim zum Neu-Initialisieren eingespeist wird und eine von dem Pseudozufallszahlengenerator auf der Basis der Zufallszahl als Keim erzeugte Pseudozufallszahl als das Ansteuersignal verwendet wird.

11. Datenspeichervorrichtung mit folgenden Merkmalen:
einer Mehrzahl von Datenspeichereinheiten (10a);
einem physikalischen Zufallszahlengenerator (16) mit einer Rauschquelle, die auf einem physikalischen Rauschprozeß basiert, zum Erzeugen einer Zufallszahl; und
einer Ersetzungseinrichtung (12) zum Auswählen einer Datenspeichereinheit, in der Daten zu speichern sind, abhängig von der Zufallszahl; **dadurch gekennzeichnet, dass**
eine Modussteuerungseinrichtung (22) vorgesehen ist,
wobei die Modussteuerungseinrichtung ausgebildet ist, um die Ersetzungseinrichtung so anzusteuern, dass in zufälligen Zeitintervallen eine Ersetzungsstrategie aufgrund einer Zufallszahl deaktiviert wird und stattdessen eine deterministische Ersetzungsstrategie eingesetzt wird, oder
dass die Modussteuerungseinrichtung ausgebildet ist, um eine Zufallszahl des physikalischen Zufallszahlengenerator über eine Zufallszahlleitung (34) zu erhalten, und, um abhängig von der Zufallszahl zwischen Ersetzungsstrategien einer Mehrzahl von verschiedenen deterministischen Ersetzungsstrategien für die Ersetzungseinrichtung (12) hin- und herzuschalten.

12. Datenspeichervorrichtung nach Anspruch 11, bei der die physikalische Rauschquelle des Zufallszahlengenerators (16) eine Schrotrauschquelle oder eine Quelle für thermisches Rauschen aufweist.

13. Datenspeichervorrichtung nach Anspruch 11 oder 12, die ferner folgendes Merkmal aufweist:
einen Pseudozufallszahlengenerator (18) zum Erzeugen einer Pseudozufallszahl;
eine Kombinationseinrichtung (20) zum Verwenden der Zufallszahl und der Pseudozufallszahl, um abhängig von der Zufallszahl und der Pseudozufallszahl ein Ansteuersignal (22) für die Ersetzungseinrichtung (12) zu liefern.

14. Datenspeichervorrichtung nach Anspruch 13, bei der die Kombinationseinrichtung (20) ausgebildet ist, um die Zufallszahl in den Pseudozufallszahlengenerator (18) als Keim einzuspeisen und eine von dem Pseudozufallszahlengenerator auf der Basis der Zufallszahl als Keim erzeugte Pseudozufallszahl als Ansteuersignal (23) für die Ersetzungseinrichtung zu verwenden.

15. Datenspeichervorrichtung nach Anspruch 13 oder 14, bei der die Ersetzungseinrichtung (12) ausgebildet ist, um eine Folge von Adressen auszuwählen, und
bei der die Kombinationseinrichtung (20) ausgebildet ist, um Ansteuersignale für die Folge von Adressen so zu erzeugen, dass ein Ansteuersignal von der Zufallszahl abhängt und ein anderes Ansteuersignal von der Pseudozufallszahl abhängt.

16. Datenspeichervorrichtung nach Anspruch 11, bei der die Modussteuerungseinrichtung (22) ausgebildet ist, um eine deterministische Ersetzungsstrategie zu veranlassen, wenn nicht-sicherheitsrelevante Berechnungen in einem mit der Datenspeichervorrichtung gekoppelten Prozessor auszuführen sind, oder wenn für eine Berechnung durch den Prozessor garantierte oder vorhersagbare Laufzeiten gefordert sind.

17. Datenspeichervorrichtung nach Anspruch 15 oder 16,
bei der die Modussteuerungseinrichtung (22) ausgebildet ist, um in regelmäßigen oder zufälligen Intervallen einen Wechsel der Ersetzungsstrategie zu veranlassen.

18. Datenspeichervorrichtung nach Anspruch 17, bei das zufällige zeitliche Intervall abhängig von einer Zufallszahl des physikalischen Zufallszahlengenerators durch die Modussteuerungseinrichtung (22) bestimmbar ist.

19. Datenspeichervorrichtung nach einem der vorhergehenden Ansprüche, die als assoziativer Cache-Speicher ausgeführt ist.

20. Verfahren zum Ersetzen eines Inhalts einer Datenspeichervorrichtung, die eine Mehrzahl von Datenspeichereinheiten aufweist, mit folgenden Schritten:
Liefern einer von einem physikalischen Rauschprozeß abhängigen Zufallszahl;
Auswählen einer Datenspeichereinheit der Mehrzahl von Datenspeichereinheiten abhängig von der physikalischen Zufallszahl; und
Speichern von zu speichernden Daten in der ausgewählten Datenspeichereinheit;
**gekennzeichnet durch** folgenden Schritt:
Durchführen einer Modussteuerung (22),
wobei der Schritt des Durchführens den Schritt des Auswählens so steuert, dass in zufälligen Zeitintervallen eine Ersetzungsstrategie aufgrund einer Zufallszahl deaktiviert wird und stattdessen eine deterministische Ersetzungsstrategie im Schritt des Auswählens eingesetzt wird, oder
dass der Schritt des Durchführens den Schritt des Erhaltens der von dem physikalischen Rauschprozess abhängigen Zufallszahl und den Schritt des Hin- und Herschaltens, abhängig von der erhaltenen Zufallszahl, zwischen Ersetzungsstrategien einer Mehrzahl von verschiedenen deterministischen Ersetzungsstrategien zum Auswählens einer Datenspeichereinheit umfaßt.

## Claims

1. Data storage device, comprising:
a plurality of data storage units (10a);
a physical random number generator (16) with a noise source based on a physical noise process, for generating a random number;
a pseudo random number generator (18) for generating a pseudo random number;
a combination means (20) for using the random number and the pseudo random number so as to provide a driving signal (23) depending of the random number and the pseudo random number; and
a replacement means (12) for selecting a data storage unit wherein data is to be stored, depending on the random number,
**characterized in that**
the combination means (20) is implemented to feed, when there is a new random number, the random number into the pseudo random number generator (18) as a seed for re-initializing and to use a pseudo random number, which has been generated by the pseudo random number generator on the basis of the random number as a seed, as a driving signal (23) for the replacement means.

2. Data storage device as claimed in claim 1, wherein the physical noise source of the random number generator (16) comprises a shot-noise source or a source for thermal noise.

3. Data storage device as claimed in claim 1 or 2,
wherein the replacement means (12) is implemented to select a sequence of addresses, and
wherein the combination means (20) is implemented to create driving signals for the sequence of addresses, such that a driving signal depends on the random number and a different driving signal depends on the pseudo random number.

4. Data storage device as claimed in one of the preceding claims,
further comprising a mode control means (22) implemented to drive the replacement means such that, within a predetermined time interval, a replacement due to a random number is deactivated, and, instead, a deterministic replacement strategy is used.

5. Data storage device as claimed in claim 4, wherein the mode control means (22) is implemented to bring about a deterministic replacement strategy if calculations which are non-relevant in terms of security are to be performed in a processor coupled to the data storage device or if guaranteed or predictable run times are required for a calculation by the processor.

6. Data storage device as claimed in claim 4 or 5,
wherein the mode control means (22) is implemented to bring about a switching of the replacement strategy at regular or random intervals.

7. Data storage device as claimed in claim 6, wherein the random time interval is determinable by the mode control means (22) depending on a random number of the physical random number generator.

8. Data storage device as claimed in claim 1,
further comprising a mode control means (22) implemented to obtain, via a random number line (34), a random number of the physical random number generator, and further implemented to select, depending on the random number, one of a plurality of different deterministic replacement strategies for the replacement means (12).

9. Data storage device as claimed in one of the preceding claims, which is implemented as an associative cache memory.

10. Method for replacing contents of a data storage device comprising a plurality of data storage units, the method comprising:
providing a random number dependent on a physical noise process;
generating a pseudo random number with a pseudo random number generator (18);
using the random number and the pseudo random number to provide a driving signal (22) for a selection of a data storage unit depending on the random number and the pseudo random number;
selecting a data storage unit from the plurality of data storage units in dependence of the physical random number, based on the driving signal (22); and
storing data to be stored in the selected data storage unit,
**characterized in that**
in the step of using, when there is a new random number, same is fed into the pseudo random number generator (18) as a seed for re-initializing and a pseudo random number generated by the pseudo random number generator on the basis of the random number as a seed is used as the driving signal.

11. Data storage device, comprising:
a plurality of data storage units (10a);
a physical random number generator (16) with a noise source based on a physical noise process, for generating a random number; and
a replacement means (12) for selecting a data storage unit wherein data is to be stored, depending on the random number; **characterized in that**
a mode control means (22) is provided,
wherein the mode control means is implemented to drive the replacement means such that, within random time intervals, a replacement strategy due to a random number is deactivated, and, instead, a deterministic replacement strategy is used, or
that the mode control means is implemented to obtain, via a random number line (34), a random number of the physical random number generator, and to switch, depending on the random number, between replacement strategies from a plurality of different deterministic replacement strategies for the replacement means (12).

12. Data storage device as claimed in claim 11, wherein the physical noise source of the random number generator (16) comprises a shot-noise source or a source for thermal noise.

13. Data storage device as claimed in claim 11 or 12, further comprising:
a pseudo random number generator (18) for generating a pseudo random number;
a combination means (20) for using the random number and the pseudo random number so as to provide a driving signal (22) for the replacement means (12) depending of the random number and the pseudo random number.

14. Data storage device as claimed in claim 13, wherein the combination means (20) is implemented to feed the random number into the pseudo random number generator (18) as a seed, and to use a pseudo random number, which has been generated by the pseudo random number generator on the basis of the random number as a seed, as a driving signal (23) for the replacement means.

15. Data storage device as claimed in claim 13 or 14, wherein the replacement means (12) is implemented to select a sequence of addresses, and
wherein the combination means (20) is implemented to create driving signals for the sequence of addresses, such that a driving signal depends on the random number and a different driving signal depends on the pseudo random number.

16. Data storage device as claimed in claim 11, wherein the mode control means (22) is implemented to bring about a deterministic replacement strategy if calculations which are non-relevant in terms of security are to be performed in a processor coupled to the data storage device or if guaranteed or predictable run times are required for a calculation by the processor.

17. Data storage device as claimed in claim 15 or 16,
wherein the mode control means (22) is implemented to bring about a switching of the replacement strategy at regular or random intervals.

18. Data storage device as claimed in claim 17, wherein the random time interval is determinable by the mode control means (22) depending on a random number of the physical random number generator.

19. Data storage device as claimed in one of the preceding claims, which is implemented as an associative cache memory.

20. Method for replacing contents of a data storage device comprising a plurality of data storage units, the method comprising:
providing a random number dependent on a physical noise process;
selecting a data storage unit from the plurality of data storage units in dependence of the physical random number; and
storing data to be stored in the selected data storage unit,
**characterized by** the following step:
performing a mode control (22),
wherein the step of performing controls the step of selecting such that, within random time intervals, a replacement strategy due to a random number is deactivated, and, instead, a deterministic replacement strategy is used in the step of selecting, or
that the step of performing includes the step of obtaining a random number and the step of switching, depending on the random number obtained, between replacement strategies from a plurality of different deterministic replacement strategies for selecting a data storage unit.

## Revendications

1. Dispositif de mémoire de données ayant les caractéristiques suivantes :
une pluralité d'unités de mémoires de données (10a) ;
un générateur de nombres aléatoires physique (16), ayant une source de bruit, qui repose sur un processus de bruit physique, pour produire un nombre aléatoire ;
un générateur de nombres pseudo-aléatoires (18), pour produire un nombre pseudo-aléatoire ;
un dispositif de combinaison (20), pour utiliser le nombre aléatoire et le nombre pseudo-aléatoire, pour délivrer un signal de commande (23), en fonction du nombre aléatoire et du nombre pseudo-aléatoire et
un dispositif de remplacement (12), pour sélectionner une unité de mémoire de données, dans laquelle des données doivent être enregistrées, en fonction du nombre aléatoire,
**caractérisé en ce que**
le dispositif de combinaison (20) est constitué, pour fournir alors, quand il existe un nouveau nombre aléatoire, le nombre aléatoire au générateur de nombres pseudo-aléatoires (18), en tant que germe de la réinitialisation et un nombre pseudo-aléatoire, produit en tant que germe par le générateur de nombres pseudo-aléatoires, sur la base du nombre aléatoire, en tant que signal de commande (23) pour le dispositif de remplacement.

2. Dispositif de mémoire de données selon la revendication 1, dans lequel la source de bruit physique du générateur de nombres aléatoires (16) présente une source d'effet de grêle ou une source de bruit thermique.

3. Dispositif de mémoire de données selon la revendication 1 ou 2, dans lequel le dispositif de remplacement (12) est constitué pour sélectionner une suite d'adresse et
dans lequel le dispositif de combinaison (20) est constitué pour produire des signaux de sélection pour la suite d'adresses, de sorte qu'un signal de commande dépend du nombre aléatoire et qu'une autre signal de commande dépend du nombre pseudo-aléatoire.

4. Dispositif de mémoire de données selon l'une des revendications précédentes,
qui présente, en outre, un dispositif de commande de mode (22), qui est constitué pour sélectionner le dispositif de remplacement, de sorte qu'un remplacement est désactivé, dans un intervalle de temps prédéterminé, sur la base d'un nombre aléatoire et qu'une stratégie de remplacement déterministe est mise en oeuvre à la place.

5. Dispositif de mémoire de données selon la revendication 4, dans lequel le dispositif de commande de mode (22) est constitué pour engager une stratégie de remplacement déterministe, quand des calculs ne relevant pas de la sécurité doivent être exécutés dans un processeur, couplé au dispositif de mémoire de données ou quand des durées d'exécution garanties ou prévisibles sont exigées pour un calcul par le processeur.

6. Dispositif de mémoire de données selon la revendication 4 ou 5,
dans lequel le dispositif de commande de mode (22) est constitué pour engager à intervalles réguliers ou aléatoires un changement de la stratégie de remplacement.

7. Dispositif de mémoire de données selon la revendication 6,
dans lequel l'intervalle chronologique aléatoire peut être défini en fonction d'un nombre aléatoire du générateur de nombres aléatoires physique par le biais du dispositif de commande de mode (22).

8. Dispositif de mémoire de données selon la revendication 1,
qui présente, en outre, un dispositif de commande de mode (22), qui est constitué pour recevoir un nombre aléatoire du générateur de nombres aléatoires physique par l'intermédiaire d'une ligne de nombres aléatoires (34) et qui est constitué, en outre, pour sélectionner, en fonction du nombre aléatoire, une pluralité de stratégies de remplacement déterministes différentes pour le dispositif de remplacement (12).

9. Dispositif de mémoire de données selon l'une des revendications précédentes, qui est réalisé en antémémoire associative.

10. Procédé de remplacement du contenu d'un dispositif de mémoire de données, qui présente une pluralité d'unités de mémoires de données, ayant les étapes suivantes, consistant à :
délivrer un nombre aléatoire, dépendant d'un processus de bruit physique ;
produire un nombre pseudo-aléatoire par un générateur de nombres pseudo-aléatoires (18) ;
utiliser le nombre aléatoire et le nombre pseudo-aléatoire, pour délivrer, en fonction du nombre aléatoire et du nombre pseudo-aléatoire, un signal de commande (23) pour la sélection d'une unité de mémoire de données ;
sélectionner une unité de mémoire de données parmi la pluralité d'unités de mémoires de données, en fonction du nombre aléatoire physique, en se fondant sur le signal de commande (23) et
enregistrer les données à enregistrer dans l'unité de mémoire de données,
**caractérisé en ce que**
à l'étape de l'utilisation, quand il existe un nouveau nombre aléatoire, celui-ci est fourni au générateur de nombres pseudo-aléatoires (18) en tant que germe de la réinitialisation et qu'un nombre pseudo-aléatoire, produit en tant que germe par le générateur de nombres pseudo-aléatoires, sur la base du nombre aléatoire, est utilisé, en tant que signal de sélection.

11. Dispositif de mémoire de données ayant les caractéristiques suivantes :
une pluralité d'unité de mémoires de données (10a) ;
un générateur de nombres aléatoires physique (16), avec une source de bruit, qui repose sur un processus de bruit physique, pour produire un nombre aléatoire et
un dispositif de remplacement (12), pour sélectionner une unité de mémoire de données, dans laquelle des données doivent être enregistrées, en fonction du nombre aléatoire,
**caractérisé en ce**
**qu'**il est prévu un dispositif de commande de mode (22),
le dispositif de commande de mode étant constitué pour commander le dispositif de remplacement, de sorte qu'une stratégie de remplacement est désactivée, en des intervalles de temps aléatoires, sur la base d'un nombre aléatoire et qu'une stratégie de remplacement déterministe est mise en oeuvre à la place,
**que** le dispositif de commande de mode est constitué pour recevoir un nombre aléatoire du générateur de nombres aléatoires physique, par l'intermédiaire d'une ligne de nombres aléatoires (34) et pour permuter dans les deux sens, en fonction du nombre aléatoire, entre des stratégies de remplacement d'une pluralité de stratégies de remplacement déterministes différentes pour le dispositif de remplacement (12).

12. Dispositif de mémoire de données selon la revendication 11, dans lequel la source de bruit physique du générateur de nombres aléatoires (16) présente une source d'effet de grêle ou une source de bruit thermique.

13. Dispositif de mémoire de données selon la revendication 11 ou 12, qui présente, en outre, la caractéristique suivante :
un générateur de nombres pseudo-aléatoires (18), pour produire un nombre pseudo-aléatoire ;
un dispositif de combinaison (20), pour utiliser le nombre aléatoire et le nombre pseudo-aléatoire, pour délivrer, en fonction du nombre aléatoire et du nombre pseudo-aléatoire, un signal de commande (23) pour le dispositif de remplacement (12).

14. Dispositif de mémoire de données selon la revendication 13, dans lequel le dispositif de combinaison (20) est constitué pour fournir le nombre aléatoire au générateur de nombres pseudo-aléatoires (18), en tant que germe et pour utiliser un nombre pseudo-aléatoire, produit en tant que germe par le générateur de nombres pseudo-aléatoires, sur la base du nombre aléatoire, en tant que signal de commande (23) pour le dispositif de remplacement.

15. Dispositif de mémoire de données selon la revendication 13 ou 14,
dans lequel le dispositif de remplacement (12) est constitué pour sélectionner une suite d'adresses et
dans lequel le dispositif de combinaison (20) est constitué pour produire des signaux de sélection pour la suite d'adresses, de sorte qu'un signal de commande dépend du nombre aléatoire et qu'un autre signal de commande dépend du nombre pseudo-aléatoire.

16. Dispositif de mémoire de données selon la revendication 11,
dans lequel le dispositif de commande de mode (22) est constitué pour engager une stratégie de remplacement déterministe, quand des calculs ne relevant pas de la sécurité doivent être exécutés dans un processeur, couplé au dispositif de mémoire de données ou quand des durées d'exécution garanties ou prévisibles sont exigées pour un calcul par le processeur.

17. Dispositif de mémoire de données selon la revendication 15 ou 16,
dans lequel le dispositif de commande de mode (22) est constitué, pour engager, suivant des intervalles réguliers ou aléatoires, un changement de la stratégie de remplacement.

18. Dispositif de mémoire de données selon la revendication 17,
dans lequel l'intervalle aléatoire dans le temps peut être défini en fonction d'un nombre aléatoire du générateur de nombres aléatoire physique, par le biais du dispositif de commande de mode (22).

19. Dispositif de mémoire de données selon l'une des revendications précédentes, qui est exécuté comme antémémoire associative.

20. Procédé de remplacement du contenu d'un dispositif de mémoire de données, qui présente une pluralité d'unités de mémoires de données, ayant les étapes suivantes, consistant à :
délivrer un nombre aléatoire, dépendant d'un processus de bruit physique ;
sélectionner une unité de mémoire de données parmi la pluralité d'unités de mémoires de données, en fonction du nombre aléatoire physique et
enregistrer des données à enregistrer dans l'unité de mémoire de données sélectionnée ;
**caractérisé par** l'étape suivante, consistant à :
exécuter une commande de mode (22),
l'étape d'exécution commandant l'étape de sélection, de sorte que, en des intervalles de temps aléatoires, une stratégie de remplacement est désactivée sur la base d'un nombre aléatoire et qu'une stratégie de remplacement déterministe est mise en oeuvre à la place au cours de l'étape de sélection ou
que l'étape d'exécution comprend l'étape d'obtention du nombre aléatoire, dépendant du processus de bruit physique et l'étape de permutation dans les deux sens, en fonction du nombre aléatoire obtenu, entre des stratégies de remplacement d'une pluralité de stratégies de remplacement déterministes différentes, pour sélectionner une unité de mémoire de données.
